# EUROPÄISCHE PATENTSCHRIFT

(11) **EP 1 281 547 B1**
(45) Veröffentlichungstag und Bekanntmachung des Hinweises auf die Patenterteilung: **19.09.2007**
(21) Anmeldenummer: 02016008.1
(22) Anmeldetag: 18.07.2002
(51) Int. Cl.: B60J 1/18, B60J 7/14, B60J 10/00, B60J 10/10, B60J 7/20, B60R 13/07

(54) **Klappdach eines Hardtop-Fahrzeuges mit einer Entwäserungsanordnung**
Folding roof of a hardtop vehicle with a water drainage arangement
Toit pliant d'un véhicule avec un hardtop muni d'un dispositif d'égouttage

(30) Priorität: 30.07.2001 DE 10137031
(43) Veröffentlichungstag der Anmeldung: 05.02.2003
(73) Patentinhaber: DaimlerChrysler AG, 70327 Stuttgart (DE)
(72) Erfinder: Graf, Thomas, 71069 Sindelfingen (DE); Wacker, Uwe, 71101 Schönaich (DE)

(56) Entgegenhaltungen:
- DE-A- 4 302 547
- DE-A- 19 502 325
- DE-C- 4 017 196
- US-A- 5 527 081
- US-A- 5 961 174
- US-A- 6 145 909

## Beschreibung

Die Erfindung betrifft ein Klappdach eines Hardtop-Fahrzeuges mit einer Entwässerungsanordnung mit einem Frontdachteil, das mit Hilfe von seitlichen und schwenkbaren Dachsäulen in eine Ablagestellung innerhalb eines Heckkofferraumes bringbar ist, sowie mit einer Heckscheibe, die beim Übergang in die Ablagestellung gegenüber den Dachsäulen verschwenkbar ist, wobei ein Wasserführungskanal an der Unterseite der Heckscheibe vorgesehen ist, der im geschlossenen Zustand des Daches unterhalb des Kofferraumdeckels verläuft und mit einem flexiblen Schlauch zur Wasserableitung verbunden ist.

Eine Vorrichtung zur Ablage der Dachkonstruktion eines Hardtop-Fahrzeuges ist aus der DE 197 51 660 C1 bekannt. Bei dieser Dachanordnung ist man davon ausgegangen, dass im Heckbereich, insbesondere im Kofferraum, zu viel Platz verloren geht, wenn die Verschwenkung von Frontdachteil und Heckdachteil um einen Hauptdrehpunkt in der Weise geschieht, dass das Frontdachteil und das Heckdachteil mit der Heckscheibe gegensinnig gewölbt im Heckbereich abgelegt werden. Man hat deshalb die Heckscheibe vom Heckdachteil abgekoppelt und mit einem eigenen Rahmen versehen. Dieser Rahmen und die Heckscheibe werden dann um einen Drehpunkt an den Dachsäulen (C-Säulen), unabhängig von Frontdachteil und C-Säulen, so verschwenkt, dass sie gleichsinnig bzw. in gleicher Krümmungsrichtung zum Frontdachteil im Heckbereich abgelegt werden kann, so dass deutlich weniger Kofferraumvolumen vom abgelegten Dach beansprucht wird.

Hinweise darauf allerdings, wie bei einer solchen Dachanordnung eine ausreichende Abdichtung und Entwässerung vorgenommen werden soll, enthält die DE 197 51 660 C1 nicht.

Aus der DE 195 02 325 C2 ist eine Entwässerungsanordnung der eingangs genannten Art bekannt. Die Heckscheibe ist dort mit einem Rahmen gehalten, der an der Unterkante der Heckscheibe einen Wasserführungskanal bildet. Dieser Wasserführungskanal ist so angeordnet und ausgebildet, dass er bei geschlossenem Klappdach unter einem Wasserführungskanal liegt, der an dem unteren Randbereich der C-Säulen angeordnet ist. Dieser, den C-Säulen zugeordnete Wasserführungskanal ist an seinem Boden mit einer Durchtrittsöffnung versehen, so dass Wasser in den darunter liegenden Wasserführungskanal der Heckscheibe gelangen kann, der wiederum im Anschlussbereich zur C-Säule mit einer Ablauföffnung und einem von dieser z.B. zum Dachhaus führenden Ablaufschlauch versehen ist. Eine solche Lösung mit einem Ablaufschlauch an einem mit der Heckscheibe verbundenen Wasserführungskanal lässt sich bei einem Klappdach der vorher erwähnten Art (DE 197 51 660 C1), bei dem Heckscheibe und Dachsäulen (C-Säulen) gleichsinnig gekrümmt im Bereich des Kofferraums abgelegt werden, nicht verwirklichen.

Es ist daher die Aufgabe der vorliegenden Erfindung, eine Entwässerungsanordnung für ein Klappdach der vorher genannten Art vorzuschlagen, die insbesondere auch dann wirksam werden kann, wenn das Fahrzeug in einer Schräglage, beispielsweise bei teilweisem Parken auf dem Gehsteig abgestellt ist.

Die Erfindung besteht bei einer Entwässerungseinrichtung der eingangs genannten Art darin, dass der Wasserführungskanal in einer der Heckscheibe zugeordneten Dichtung vorgesehen wird und im Bereich der Dachsäulen jeweils in einer Auffangwanne mündet, die Teil der Abdichtung der Dachsäulen oder des außerhalb der Heckscheibe liegenden Teiles des Heckdaches ist und über den flexiblen Schlauch mit dem Feuchtraum einer der Fahrzeugseitenscheiben in Verbindung steht.

Durch diese Ausgestaltung wird es möglich, vom Dach abgeleitetes Wasser in einen Bereich zu bringen, der in an sich bekannter Weise mit einem Entwässerungsraum versehen ist. Die Verwendung eines flexiblen, insbesondere als eine Art Wellschlauch ausgebildeten Verbindungsschlauches bietet dabei den Vorteil, dass der Schlauch ohne Probleme der Bewegung der seitlichen Dachsäulen folgen kann und so vom tiefsten Punkt des Daches, also dort, wo die Auffangwanne angeordnet wird, die Ableitung von Wasser bewirkt. In der abgelegten Stellung des Daches kann sich der Schlauch, insbesondere wenn er als Wellenschlauch ausgebildet ist, ohne einzuknicken zusammenlegen und verbleibt daher als Verbindungsstück auch in der zusammengelegten Ablegestellung des Daches zu dem Feuchtraum der Seitenscheibe und dem ihm zugeordneten Entwässerungskanal.

In Weiterbildung der Erfindung kann der Wasserführungskanal zwischen zwei parallel verlaufenden Dichtwulsten gebildet sein, die mit korrespondierenden Wulsten einer der Unterkante der Dachsäulen oder den von diesen gebildeten seitlichen Teilen des Heckdaches zugeordneten zweiten Dichtung fluchten. In weiterer Ausgestaltung können die Wulste der beiden Dichtungen mit Stoßstellen aneinandergrenzen, die in der Längsrichtung der jeweiligen Dichtung gesehen zueinander versetzt angeordnet sind. Durch diese Ausgestaltung im unteren Heckbereich, wo sich abfließendes Wasser aufgrund des fehlenden Gefälles staut, kann sich Wasser, das beispielsweise über die Stoßstelle der Hauptdichtung eindringt, so z.B. beim Säubern des Fahrzeuges mit einem Hochdruckreiniger, gleichmäßig in dem darunter liegenden Wasserführungskanal verteilen und dann abgeleitet werden.

Bei dieser Ausgestaltung kann die Stoßstelle des näher zur Heckscheibe liegenden Wulstes weiter in den Bereich der Dachsäule oder Heckdachs hereinragen als die Stoßstelle des zweiten Wulstes. Dies führt dazu, dass die Stoßfläche der Hauptabdichtung am ersten Wulst nicht im kritischen Eckbereich zu liegen kommt. Es lassen sich dadurch weitgehend homogene Dichtebenen erzeugen.

In Weiterbildung der Erfindung können schließlich die Stoßstellen schräg geschnitten werden, so dass sie sich bei geschlossenem Dach gut übereinander legen und außerdem auch dazu dienen können, Toleranzen in Y-Richtung auszugleichen.

Die Erfindung ist anhand eines Ausführungsbeispieles in der Zeichnung gezeigt und wird im folgenden erläutert. Es zeigen:
- Fig. 1: eine schematische perspektivische Teilansicht einer Entwässerungsanordnung im Bereich der unteren Endkante der Heckscheibe,
- Fig. 2: eine schematische perspektivische Darstellung des Verlaufes des Entwässerungsschlauches bei geschlossenem Dach und
- Fig. 3: die Lage des Entwässerungsschlauches bei im Heckbereich abgelegtem Klappdach.

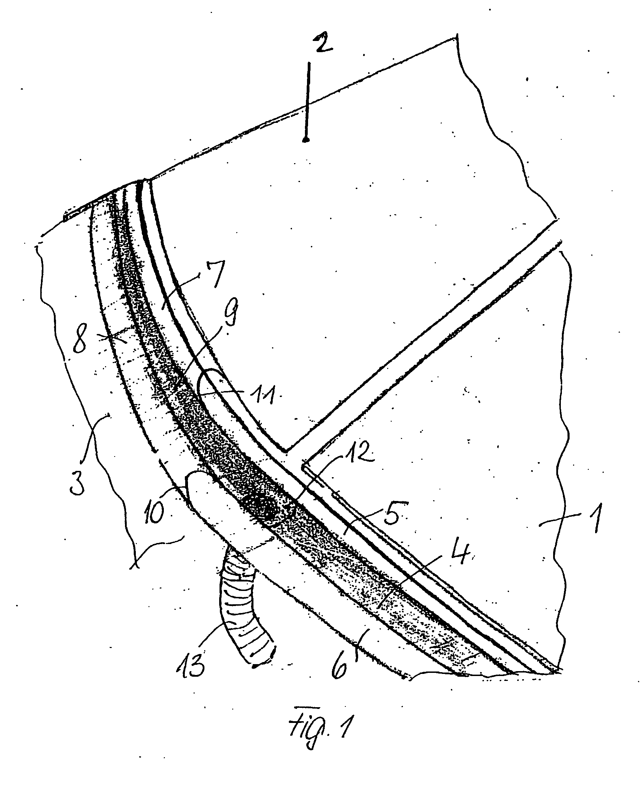

Die Fig. 1 lässt zunächst erkennen, dass eine Heckscheibe 1 im Seitenbereich an eine schwenkbare Dachsäule 2 (C-Säule) angrenzt und dass ein Heckdeckel 3 wiederum an die Dachsäule 2 und die Heckscheibe 1 anschließt, der im gezeigten Zustand, in dem das Dach die geschlossene Stellung einnimmt, über die jeweils der Dachsäule 2 und der Heckscheibe 1 zugeordnete Abdichtung greift. Zwischen dem Heckdeckel 3 und den Dachteilen befindet sich bei einem Fahrzeug mit einem abschwenkbaren Hardtop kein Entwässerungskanal. Der Heckscheibe 1 ist daher ein Wasserführungskanal 4 zugeordnet, der zwischen zwei etwa parallel zueinander verlaufenden Dichtungswülsten 5 und 6 liegt. Der Dichtungswust 5 ragt dabei von der Heckscheibe 1 ausgehend weiter in den Bereich der seitlichen Dachsäule 2 herein, als der Dichtungswulst 6.

Dem Fuß des seitlichen Dachteiles, der von der Dachsäule 2 gebildet ist, ist ebenfalls eine Dichtung, bestehend aus zwei Wulsten 7 und 8 zugeordnet, zwischen denen sich ein Wasserführungskanal 9 befindet. Die Dichtungswulste 5 und 7 einerseits und die Dichtungswulste 6 und 8 andererseits grenzen mit Stoßstellen 10 und 11 aneinander, die jeweils schräg geschnitten sind, so dass das Ende des Wulstes 5 in der dargestellten Lage das Ende des Wulstes 7 überlappt. In gleicher Weise überlappt das Ende des Wulstes 6 an der Stoßstelle 10 das Ende des Wulstes 8. Die beiden Stoßstellen 11 sind, wie vorher schon angedeutet wurde, in der Längsrichtung der Wasserführungskanäle 4 und 9 bzw. der beiden Dichtungsanordnungen, in denen sie gebildet sind, versetzt zueinander im Bereich der Stoßstelle 11 angeordnet, welche der Hauptdichtung zugeordnet ist. Eindringendes Wasser, das beispielsweise in einer Waschanlage oder beim Reinigen des Fahrzeuges mit einem Hochdruckschlauch an dieser Stoßstelle durchtreten könnte, verteilt sich daher im Wasserführungskanal 9, der auf der gegenüberliegenden Seite von dem durchgehenden Wulst 8 begrenzt ist. Beide Wasserführungskanäle 4 und 9 stehen mit einer Auffangwanne 12 in Verbindung, die am tiefsten Punkt der Dachanordnung, beim Ausführungsbeispiel im Bereich der Dachsäule (C-Säule), liegt. Die Auffangwanne 12 mündet unten in einen Anschlussstutzen, der mit einem Wellschlauch 13 bestückt ist, der in noch zu beschreibender Weise aus dem Heckbereich des Daches, das keine Entwässerungsmöglichkeiten hat, zum Feuchtraum einer der Seitenscheiben, insbesondere zum Feuchtraum der Fontseitenscheibe führt.

Diese Ausgestaltung gewährleistet daher, dass sich im Heckbereich des Daches anstauendes Wasser auch dann abführen lässt, wenn das Fahrzeug beispielsweise schräg geparkt ist, so dass ohne die Auffangwanne 12 und den Entwässerungsschlauch 13 keine Möglichkeit zum Abfluss des in der Dichtung gefangenen Wassers gegeben wäre. Eine solche Auffangwanne 12 und ein Entwässerungsschlauch 13 sind natürlich nicht nur auf der schematisch dargestellten linken Seite der Heckscheibe 1, sondern auch auf deren rechten Seite analog vorgesehen.

Die Fig. 2 zeigt schematisch zunächst in einem Einblick in das Innere des Klappdaches die Dachsäule 2 mit der Auffangwanne 12 und dem Entwässerungsschlauch, der in dieser Stellung, in der das Dach geschlossen ist, von der Auffangwanne 12 aus zu einem Anschlussstutzen 14 hin gespannt ist, der wiederum mit dem nicht gezeigten Feuchtraum des Fontseitenscheibe in Verbindung steht. Der Entwässerungsschlauch 13 mündet dabei in etwa in dem Bereich des Klappdaches, in dem die Befestigungsbasis 15 für die zum Schwenken des Daches vorgesehenen Betätigungshebel 16 und 17 am Fahrzeug angelenkt ist.

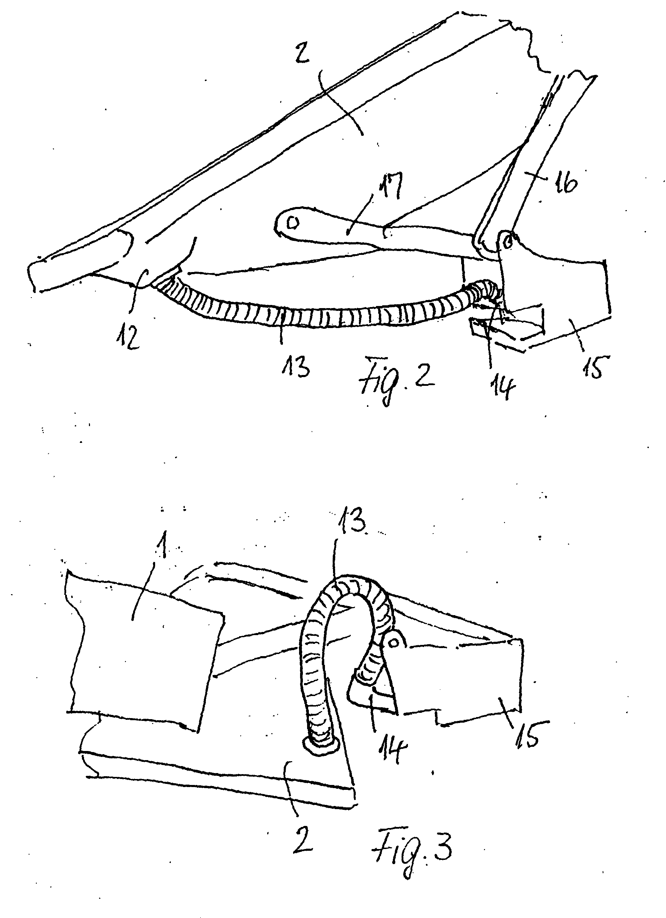

Fig. 3 zeigt den Entwässerungsschlauch 13 im mehr oder weniger zusammengestauchten Zustand, den er einnimmt, wenn die Dachsäule 2, die hier auch den Rest des Heckdachteiles bildet, der zu beiden Seiten der schwenkbaren Heckscheibe 1 verläuft, sich in der abgelegten Stellung unterhalb des Kofferraumdeckels 3 befindet.

Fig. 1 lässt im übrigen auch erkennen, dass der Kofferraumdeckel 3 die Entwässerungskanäle 4 und 9 überdeckt, dass aber zwischen ihm und den Dachteilen, weil er nur auf den Dichtungswülsten 6 und 8 zur Auflage kommt, ein Spalt verbleibt, durch den das in der vorher geschilderten Weise abzuleitende Wasser in die Dichtungsanordnung und von da über den Schlauch 13 zur Abfuhr gelangt.

## Patentansprüche

1. Klappdach eines Hardtop- Fahrzeuges mit einer Entwässerungsanordnung, mit einem Frontdachteil, das mit Hilfe von seitlichen und schwenkbaren Dachsäulen (2) in eine Ablagestellung innerhalb eines Heckkofferraumes bringbar ist, sowie mit einer Heckscheibe (1), die beim Übergang in die Ablagestellung gegenüber den Dachsäulen (2) verschwenkbar ist, wobei ein Wasserführungskanal (4) an der Unterkante der Heckscheibe (1) vorgesehen ist, der im geschlossenen Zustand des Daches unterhalb eines den Dachsäulen und der Heckscheibe anschließenden Heckdeckels (3) verläuft und mit einem flexiblen Schlauch zur Wasserableitung verbunden ist,
**dadurch gekennzeichnet, dass**
der Wasserführungskanal (4) in einer der Heckscheibe zugeordneten Dichtung (5, 6) vorgesehen ist und im Bereich der Dachsäulen (2) jeweils in einer Auffangwanne (12) mündet, die Teil der Abdichtung der Dachsäulen (2) oder des außerhalb der Heckscheibe liegenden Teiles des Heckdaches ist und über den flexiblen Schlauch (13) mit dem Feuchtraum einer der Fahrzeugseitenscheiben in Verbindung steht.

2. Klappdach nach Anspruch 1,
**dadurch gekennzeichnet, dass**
als flexibler Schlauch (13) ein gegen Knicken stabiler Wellschlauch vorgesehen ist.

3. Klappdach nach Anspruch 1,
**dadurch gekennzeichnet, dass**
der Wasserführungskanal (4) zwischen zwei parallel verlaufenden Dichtwülsten (5, 6) gebildet ist, die mit korrespondierenden Wülsten (7, 8) einer der Unterkante der Dachsäule oder dem von diesen gebildeten seitlichen Heckdach zugeordneten zweiten Dichtung fluchten.

4. Klappdach nach Anspruch 3,
**dadurch gekennzeichnet, dass**
das die Wülste (5, 7 bzw. 6, 8) der beiden Dichtungen mit Stoßstellen (11, 10) aneinandergrenzen, die in der Längsrichtung der Dichtung gesehen, zueinander versetzt angeordnet sind.

5. Klappdach nach Anspruch 4,
**dadurch gekennzeichnet, dass**
die Stoßstelle (11) des näher zur Heckscheibe (1) liegenden Wulstes (5) weiter in den Bereich der Dachsäule (2) hereinragt, als die Stoßstelle (10) des zweiten Wulstes (6).

6. Klappdach nach Anspruch 4 oder 5,
**dadurch gekennzeichnet, dass**
die Stoßstellen (11, 10) schräg geschnitten sind.

## Claims

1. Folding roof of a hardtop vehicle with a water drainage arrangement, with a front roof portion which can be brought with the aid of lateral and swivelling roof posts (2) to a stowed position inside a luggage compartment space, and with a rear window (1) which can be swivelled relative to the roof posts (2) during transfer to the said stowed position, a water duct (4) being provided at the lower edge of the rear window (1) which, when the roof is in the closed position, extends under a luggage compartment lid (3) joined to the roof posts and the rear window and is connected to a flexible tube for draining water away,
**characterised in that**
the water duct (4) is provided in a seal (5, 6) associated with the rear window and opens into drain traps (12) in the respective areas of the roof posts (2), which are part of the seal of the roof posts (2) or of that portion of the rear roof which is outside the rear window and is connected via the flexible tube (13) to the humidity space of one of the vehicle's side windows.

2. Folding roof according to Claim 1,
**characterised in that**
a buckling-resistant corrugated hose is used as the flexible tube (13).

3. Folding roof according to Claim 1,
**characterised in that**
the water duct (4) is formed between two parallel seal beads (5, 6) which are aligned with corresponding beads (7, 8) of a second seal associated with the lower edge of the roof post or the lateral rear roof formed thereby.

4. Folding roof according to Claim 3,
**characterised in that**
the beads (5, 7 and 6, 8 respectively) of the two seals meet at abutment points (11, 10) which, viewed in the longitudinal direction of the seal, are arranged offset relative to one another.

5. Folding roof according to Claim 4,
**characterised in that**
the abutment point (11) of the bead (5) that is closer to the rear window (1) extends further into the area of the roof posts (2) than the abutment point (10) of the second bead (6).

6. Folding roof according to Claims 4 or 5,
**characterised in that**
the abutment points (11, 10) are cut obliquely.

## Revendications

1. Toit repliable d'un véhicule à toit amovible comprenant un dispositif d'évacuation d'eau, une partie de toit avant, qui peut être amenée à l'aide de montants de toit (2) latéraux et pivotants dans une position de dépose à l'intérieur d'un coffre à bagages arrière, et une lunette arrière (1), qui peut basculer par rapport aux montants de toit (2) lors du passage dans la position de dépose, un conduit de guidage d'eau (4) étant prévu sur l'arête inférieure de la lunette arrière (1), lequel est agencé au-dessous d'un revêtement arrière se raccordant aux montants de toit et à la lunette arrière lorsque le toit est fermé et est relié à un tuyau flexible pour l'évacuation de l'eau,
**caractérisé en ce que**,
le conduit de guidage d'eau (4) est prévu dans un joint (5, 6) attribué à la lunette arrière et débouche dans la zone des montants de toit (2) à chaque fois dans une cuve de réception (12), qui fait partie de l'étanchéité des montants de toit (2) ou de la partie, située à l'extérieur de la lunette arrière, du toit arrière et est en liaison par le tuyau (13) flexible avec l'espace humide de l'une des vitres latérales du véhicule.

2. Toit repliable selon la revendication 1,
**caractérisé en ce qu'**un tuyau flexible ondulé stable résistant au flambage est prévu comme tuyau (13) flexible.

3. Toit repliable selon la revendication 1,
**caractérisé en ce que** le conduit de guidage d'eau (4) est formé entre deux renflements d'étanchéité (5, 6) agencés en parallèle, qui sont alignés avec des renflements (7, 8) correspondants d'un second joint attribué à l'arête inférieure du montant de toit ou au toit arrière latéral formé par ces renflements.

4. Toit repliable selon la revendication 3,
**caractérisé en ce que** les renflements (5, 7 ou 6, 8) des deux joints sont juxtaposés avec des points de jonction (11, 10), qui, vus dans le sens longitudinal du joint, sont disposés en décalage les uns par rapport aux autres.

5. Toit repliable selon la revendication 4,
**caractérisé en ce que** le point de jonction (11) du renflement (5) situé plus près de la lunette arrière (1) dépasse davantage dans la zone du montant de toit (2) que le point de jonction (10) du second renflement (6).

6. Toit repliable selon la revendication 4 ou 5,
**caractérisé en ce que** les points de jonction (11, 10) sont coupés en biais.
